# EUROPÄISCHE PATENTSCHRIFT

(11) **EP 2 572 965 B1**
(45) Veröffentlichungstag und Bekanntmachung des Hinweises auf die Patenterteilung: **20.08.2014**
(21) Anmeldenummer: 12175253.9
(22) Anmeldetag: 06.07.2012
(51) Int. Cl.: B62D 21/11, B62D 21/15

(54) **Achsanordnung mit Ausklinkvorrichtung für die Karosserieanbindung des Achshilfsrahmens**
Axle arrangement having a de-coupling device for the connection between the subframe and the vehicle body
Ensemble essieu avec moyens de découplage pour la liaison entre le berceau et la carrosserie de véhicule

(30) Priorität: 22.09.2011 DE 102011122556
(43) Veröffentlichungstag der Anmeldung: 27.03.2013
(73) Patentinhaber: Benteler Automobiltechnik GmbH, 33102 Paderborn (DE)
(72) Erfinder: Hummelt, Jürgen, 33100 Paderborn (DE); Fritsch, Tobias, 33014 Bad Driburg (DE); Brüggemann, Thomas, 33415 Verl (DE); Dippel, Lothar, 34479 Breuna (DE); Friesen, Dieter, 33102 Paderborn (DE)
(74) Vertreter: Griepenstroh, Jörg

(56) Entgegenhaltungen:
- EP-A2- 0 926 048
- EP-A2- 1 712 451
- EP-B1- 0 602 331
- DE-A1-102009 034 860

## Beschreibung

Die vorliegende Erfindung betrifft eine Achsanordnung für ein Kraftfahrzeug gemäß den Merkmalen im Oberbegriff von Patentanspruch 1.

Bei Kraftfahrzeugen werden heutzutage Kraftfahrzeugachsanordnungen eingesetzt, die als eigenständige, komplexe Baugruppe an eine selbsttragende Kraftfahrzeugkarosserie gekoppelt werden. Die Achsanordnung selbst besteht dabei zumeist aus einem Achshilfsrahmen, wobei an dem Achshilfsrahmen die einzelnen weiteren Komponenten der Kraftfahrzeugachsanordnung gekoppelt sind. Diese bestehen beispielsweise aus mehreren Lenkern, die die kinematische Kopplung des Rades bzw. des Radträgers mit dem Achshilfsrahmen herstellen. Bei den Lenkern kann es sich beispielsweise um Doppelquerlenker oder aber auch um einzelne Lenker, die im Verbund eine 4-Lenker- oder 5-Lenker-Hinterachse bilden, handeln. Die Lenker selbst sind über Gummi-Metall-Lager an dem Achshilfsrahmen angebunden und radseitig mit einem Radträger gekoppelt, wobei an dem Radträger wiederum über eine entsprechende Radnabe das Kraftfahrzeugrad gekoppelt ist.

Der Achshilfsrahmen ist ein im Wesentlichen biegesteifes und torsionssteifes Bauteil, das wiederum selbst mit der Kraftfahrzeugkarosserie gekoppelt ist. Die Koppelung erfolgt zumeist schubstarr, das heißt durch direkte Verschraubung ohne dämpfende Elemente. Im Falle eines Kraftfahrzeugcrashs oder aber einer ungewollten Kraftübertragung des Rades über die Lenker an den Achshilfsrahmen besteht die Möglichkeit, dass sich der Achshilfsrahmen verbiegt. Ein Verbiegen des Achshilfsrahmens zieht aufgrund der festen Koppelung von Achshilfsrahmen und Kraftfahrzeugkarosserie auch eine Verbiegung bzw. ein Verzug der Kraftfahrzeugkarosserie nach sich.

Nachteilig bei entsprechend aus dem Stand der Technik bekannten Sollknickstellen ist, dass ein Erreichen eines Kraftschwellwertes und eine damit verbundene mechanische Detektion des potentiellen Unfalls nur unzureichend von einer kurzzeitig auftretenden Spitzenbelastung unterscheidbar sind. Es kann also passieren, dass ein Lenker im normalen Fahrbetrieb beispielsweise durch zu schnelles Überfahren einer Bodenschwelle oder aber eines Schlagloches einknickt, ohne dass ein realer Unfall stattgefunden hat.

Nachteilig bei aus dem Stand der Technik bekannten Ausklinkvorrichtungen ist eine aufwendige und damit in der Produktion kostenintensive Koppelung von Achshilfsrahmen mit der Kraftfahrzeugkarosserie. Durch aufwendige Koppelungsmaßnahmen entsteht eine Schwächung des Achshilfsrahmens, der beispielsweise als Schweißbauteil oder aber Hybridbauteil hergestellt ist.

Weiterhin ist es aus dem Stand der Technik bekannt, dass im Falle eines Crashes hoher Intensität, der unter Umständen eine vollständige Zerstörung des Fahrzeugvorderwagens mit sich bringt, die Vorderachse und/oder die Motoraufhängung derart mit der Kraftfahrzeugkarosserie gekoppelt ist, dass Sie durch die kinematische Koppelung während des Deformationsvorgangs unterhalb des Fahrgastraumes geleitet wird. Entsprechend bekannte Aufhängungen sind kostenintensiv herzustellen und zumeist nur bei einem reinen Frontalaufprall in ihrer Funktionalität einwandfrei. Erfolgt der Aufprall leicht versetzt, beispielsweise auch aus Kraftfahrzeug Y-Richtung ist ein Unterführen der Vorderachsaufhängung und/oder Motoraufhängung unter die Fahrgastzelle nicht zweifelsfrei möglich.

Aus der EP 0 602 331 B1 ist ein Hilfsrahmen bekannt, dessen vordere Anbindung an die Karosserie über eine Verschraubung erfolgt. Bei Erreichen eines Kraftschwellwerts klinkt sich die Karosserieanbindung aus der Verschraubung aus bzw. schert von dieser ab. Die in zuvor benannter Patentschrift beschriebene Hilfsrahmenkonstruktion besteht jedoch aus energieverzehrenden Abschnitten sowie leicht verformbaren Abschnitten und damit gekoppelten Hilfslängsträgern. Mithin ist die Hilfsrahmenkonstruktion aufwendig aus verschiedensten Bauteilen hergestellt.

Aufgabe der vorliegenden Erfindung ist es daher, eine Ausklinkvorrichtung einer Achsanordnung an einem Kraftfahrzeug bereit zu stellen, die gegenüber dem Stand der Technik kostengünstiger und einfacher herstellbar ist und gleichzeitig die Crasheigenschaften verbessert.

Die Aufgabe wird erfindungsgemäß mit einer Achsanordnung für ein Kraftfahrzeug gemäß den Merkmalen in Patentanspruch 1 gelöst.

Vorteilhafte Ausführungsvarianten der vorliegenden Erfindung sind Bestandteil der abhängigen Patentansprüche.

Bei der erfindungsgemäßen Achsanordnung sind Achslenker über einen Achshilfsrahmen an eine Kraftfahrzeugkarosserie gekoppelt und der Achshilfsrahmen weist vordere Karosserieanbindungen zur Verschraubung mit der Karosserie auf, wobei sich die Verschraubung bei Erreichen eines Kraftschwellwertes ausklinkt und wobei erfindungsgemäß die vordere Karosserieanbindung als einteiliges Tiefziehbauteil ausgebildet ist.

Im Rahmen der Erfindung wird also eine Achsanordnung gewählt, die aus einem Achshilfsrahmen mit an den Achshilfsrahmen gekoppelten Achslenkern bzw. Lenkern ausgebildet ist. Bei den Lenkern kann es sich um Doppelquerlenker oder aber auch um einfache Stablenker handeln, die mittels Gelenken an dem Achshilfsrahmen drehbar bzw. schwenkbar gelagert sind. Bei den Gelenken handelt es sich beispielsweise um Gummi-Metall-Lager, die mittels eines Bolzens an dem Achshilfsrahmen gekoppelt sind, so dass der Lenker um den Bolzen schwenkbar ist.

An den Lenkern selber sind wiederum radseitig Radträger gekoppelt, wobei an den Radträgern das Rad drehbar oder antreibbar aufgehangen ist. Damit die Kraftfahrzeugfederung realisiert wird, sind vorzugsweise Schraubendruckfedern über vordere Karosserieanbindungen an dem Achshilfsrahmen oder aber an der Kraftfahrzeugkarosserie abgestützt. Bei den vorderen Karosserieanbindungen handelt es sich um ein turmförmiges, muldenartiges bzw. hülsenartiges Blechbauteil, das von unten an der Kraftfahrzeugkarosserie angeordnet ist. Im Rahmen der Erfindung können jedoch auch Luftfedern oder aber andersartige Federn ebenfalls eingesetzt werden.

Der Achshilfsrahmen selbst ist über eine Verschraubung an die Karosserie gekoppelt. Hierbei kann es sich um eine starre Koppelung handeln oder aber es können elastische Elemente, beispielsweise Elastomerlager, zwischen Achshilfsrahmen und der Karosserie angeordnet sein. Die Verschraubung ist erfindungsgemäß derart ausgebildet, dass bei Erreichen eines Kraftschwellwertes sich die Verschraubung ausklinkt oder aber der Achshilfsrahmen sich aus der Verschraubung ausklinkt. Hierdurch wird der Achshitfsrahmen von der Kraftfahrzeugkarosserie getrennt. Im Falle der Einleitung einer entsprechenden Kraft in Kraftfahrzeug-X- oder -Y- oder gar auch Kraftfahrzeug-Z-Richtung, die einen vorgegebenen Kraftschwellwert übersteigt, wird somit verhindert, dass sich eine bleibende Beschädigung durch Biegung oder Torsion an der Karosserie ausbildet.

Besonderes Augenmerk der Erfindung liegt darauf, dass die vordere Karosserieanbindung als einteiliges Tiefziehbauteil ausgebildet ist. Bevorzugt ist das Tiefziehbauteil aus einer metallischen Legierung oder aus einer Leichtmetalllegierung hergestellt. Insbesondere kommt ein Kaltumformprozess oder aber ein Warmumformprozess mit anschließendem Presshärten zum Einsatz. Hierdurch wird ein besonders steifes Bauteil hergestellt, das insbesondere einfache produzierbar und somit kostengünstiger herstellbar ist. Es findet gegenüber aus dem Stand der Technik bekannten Aufhängungsbauteilen, die als Schweißkonstruktion ausgelegt sind, entsprechend kein zusätzlicher Wärmeeintrag im Bereich der Anbindung für das Ausklinken oder aber im Bereich der Aufnahme einer Schraubendruckfeder statt. Durch die Herstellung als einteiliges Tiefziehbauteil findet kein zusätzlicher Wärmeeintrag in die vordere Karosserieanbindung statt, der sich hier nachteilig auf eine Gefügeumwandlung oder -änderung auswirken würde.

Im Falle eines Kraftfahrzeugcrashs bzw. bei Erreichen des Kraftschwellwertes klinkt sich somit die Verschraubung aus dem Aufnahmebereich in der vorderen Karosserieanbindung des Achshilfsrahmens aus. Hierdurch wird eine tiefergehende Beschädigung der Kraftfahrzeugkarosserie vermieden, so dass die Crashenergie durch eine Verformung des Achshilfsrahmens absorbiert wird. Die kinetische Crashenergie oder aber Aufprallenergie wird somit in Verformungsenergie umgewandelt oder aber die Achsanordnung wird unter die Fahrgastzelle der Kraftfahrzeugkarosserie geführt.

Besonders bevorzugt ist die vordere Karosserieanbindung als Blechbauteil ausgebildet, vorzugsweise als warmumgeformtes und pressgehärtetes Blechbauteil. Im Rahmen der Erfindung ist es somit möglich, die vordere Karosserieanbindung als ein einziges Tiefziehbauteil aus einem Stahlblech, insbesondere aus einem härtbaren Stahlblech, herzustellen. Hierbei wird die vordere Karosserieanbindung erfindungsgemäß aus nur einer Blechplatine einstückig hergestellt, so dass nach Abschluss des Tiefziehvorgangs das Bauteil selbst fertig ist und durch Koppelung mit dem Achshilfsrahmen fertiggestellt ist. Die vordere Karosserieanbindung ist dabei bevorzugt durch stoffschlüssige Verbindung, insbesondere bevorzugt durch Schweißen, an den Achshilfsrahmen angebunden.

Weiterhin bevorzugt ist an der vorderen Karosserieanbindung an einem Rand zumindest abschnittsweise ein umlaufender Flansch ausgebildet. Insbesondere ist der umlaufende Flansch in und/oder an einem Aufnahmebereich ausgebildet, wobei die vordere Karosserieanbindung mit der Kraftfahrzeugkarosserie über den Aufnahmebereich verschraubt ist. Hierbei wird durch den Flansch, der am Rand des Aufnahmebereichs und/oder zumindest abschnittsweise umlaufend an der gesamten vorderen Karosserieanbindung ausgebildet ist, eine zusätzliche Versteifung des Bauteils selbst hergestellt. Ein mehrteiliges Bauteil, insbesondere im Anbindungsbereich, wird hierdurch vermieden.

In einer weiteren bevorzugten Ausführungsvariante ist der vorderen Karosserieanbindung selbst ein zusätzliches Verstärkungsbauteil zugeordnet. Die vordere Karosserieanbindung steht gegenüber dem Achshilfsrahmen insbesondere in Kraftfahrzeug-Z-Richtung nach oben hin turmartig ab. Sie ist insgesamt als muldenartiges Bauteil ausgebildet, wobei die der Muldenseite gegenüberliegende Öffnung der vorderen Karosserieanbindung durch das zusätzliche Verstärkungsbauteil abgeschlossen wird. Das Verstärkungsbauteil deckt somit eine Öffnung des muldenartigen Bauteils zumindest bereichsweise ab.

Das Verstärkungsbauteil kann in einer bevorzugten Ausführungsvariante in die vordere Karosserieanbindung geklebt sein oder aber auch geschweißt sein. Durch das Verstärkungsbauteil wird entsprechend die Biegesteifigkeit und insbesondere die Widerstandssteifigkeit in Kraftfahrzeug-X- und Kraftfahrzeug-Y-Richtung der vorderen Karosserieanbindung erhöht. Gleichzeitig wird durch das Verstärkungsbauteil jedoch eine vom Kraftfahrzeugunterboden aus erreichbare gute Montierbarkeit des Achshilfsrahmens gewährleistet, da das Verstärkungsbauteil nicht den Anbindungsbereich abdeckt. Der Anbindungsbereich ist somit von unten frei zugänglich, wodurch eine leichte Montage des Achshilfsrahmens unterhalb der Kraftfahrzeugkarosserie ermöglicht wird.

Weiterhin bevorzugt weist die vordere Karosserieanbindung einen Anbindungsbereich auf, über den die vordere Karosserieanbindung mit der Kraftfahrzeugkarosserie gekoppelt ist. Der Anbindungsbereich ist dabei derart ausgebildet, dass er die turmartige vordere Karosserieanbindung haubenartig abschließt. Der Anbindungsbereich ist einstückig, kappenartig bzw. haubenartig an einem oberen Ende der turmartigen Karosserieanbindung angeordnet und wird ebenfalls bei dem Tiefziehprozess mit ausgebildet.

In dem Anbindungsbereich ist wiederum eine Aufnahmeöffnung angeordnet, wobei der Achshilfsrahmen über einen Bolzen mit der Kraftfahrzeugkarosserie gekoppelt ist. Der Bolzen ist somit in der Aufnahmeöffnung angeordnet, wobei die Aufnahmeöffnung selbst wiederum im Anbindungsbereich der vorderen Karosserieanbindung positioniert ist. Im Falle des Erreichens eines Kraftschwellwertes klinkt sich folglich der Bolzen aus der Aufnahmeöffnung aus und gibt somit den Achshilfsrahmen frei, so dass eine weitergehende Beschädigung der Kraftfahrzeugkarosserie in dem Bereich der Aufnahmeöffnung selbst oder aber des Anbindungsbereichs der vorderen Karosserieanbindung vermieden wird.

Weiterhin bevorzugt weist die vordere Karosserieanbindung eine Wandstärke zwischen 10 mm und 0,5 mm, insbesondere zwischen 5 mm und 0,7 mm und besonders bevorzugt zwischen 3 mm und 2 mm auf. Im Rahmen der Erfindung kann die Wandstärke an dem gesamten Blechbauteil, also der gesamten vorderen Karosserieanbindung, ausgebildet sein oder aber nur bereichsweise in dem Anbindungsbereich. Durch eine Blechwandstärke im Bereich zwischen 3,0 mm und 2 mm bzw. vorzugsweise in weiter eingeschränkten Intervallen ist es für eine metallische Legierung möglich, ein entsprechendes Verbiegen des Anbindungsbereichs in einem Crashfall zu realisieren. Im Rahmen der Erfindung ist es durch die Blechwandstärke ebenfalls möglich, dass es zu einem gezielten Abreißen bzw. Ausreißen des Anbindungsbereichs je nach Kraftintensität kommt, was zur Unterstützung der Ausklinkfunktion bzw. zum Lösen der Befestigungsschraube von dem Anbindungsbereich oder aber des Anbindungsbereichs von der Befestigungsschraube führt. Im Falle des Einsatzes einer Leichtmetalllegierung wird bevorzugt eine Blechwandstärke zwischen 7 mm und 5 mm, insbesondere von ca. 6 mm verwendet. Auch bei dieser Blechwandstärke wird durch die Festigkeitseigenschaften der leichtmetallischen Legierung ein entsprechend positives Deformations- und/oder Ausklinkverhalten erreicht.

Besonders bevorzugt ist die Aufnahmeöffnung selbst hierzu asymmetrisch ausgebildet, insbesondere durch ein sich über eine Biegekante erstreckendes Langloch, wobei das Langloch besonders bevorzugt an einer Oberseite des Anbindungsbereichs schmaler ausgebildet ist als an einem Seitenteil des Anbindungsbereichs. Hierdurch wird erreicht, dass die Verschraubung an dem schmalen Bereich des Langlochs ein Widerlager findet, so dass eine feste Verschraubung bzw. eine feste Koppelung zwischen der vorderen Karosserieanbindung und der Kraftfahrzeugkarosserie erfolgt. Durch das sich über eine Biegekante erstreckendes Langloch und die Verbreiterung des Langlochs in einem Seitenteil ist es möglich, dass die Verschraubung aus dem Langloch herausgleitet, ohne auf einen mechanischen oder aber formschlüssigen Widerstand zu treffen. Die eigentliche Haltekraft erfolgt somit maßgeblich durch eine Reibkraft bzw. über eine durch die Verschraubung aufgebrachte Haftkraft bzw. Normalkraft. Ein entsprechender Kraftschwellwert, bei dem die vordere Karosserieanbindung sich aus der Verschraubung ausklinkt und somit von der Karosserie löst, liegt bei 15 kN bis 30 kN, vorzugsweise bei 18 kN bis 25 kN und insbesondere bei 19 kN bis 24 kN.

Das Seitenteil an der oberen Kappe der vorderen Karosserieanbindung ist bevorzugt in Fahrtrichtung des Kraftfahrzeugs vorne angeordnet. Hierdurch kann eine Krafteinwirkung, die maßgeblich durch einen Frontalaufprall, also in Kraftfahrzeug-X-Richtung oder aber auch mit geringen Anteilen aus Kraftfahrzeug-Y-Richtung kommend, auf den Achshilfsrahmen einwirkt, zu einem Ausklinkvorgang führen. Ebenfalls ist durch die erfindungsgemäße Anordnung von einer turmartigen, vorderen Achsaufhängung in Verbindung mit einer asymmetrischen Aufnahmeöffnung, ein Ausklinkvorgang mit Krafteinwirkung aus Kraftfahrzeug-Z-Richtung möglich. Die vordere Karosserieanbindung wird somit vom Motorlängslenker aus in Kraftfahrzeug-X-Richtung nach hinten verschoben.

Hierdurch bedingt sich, dass die Aufnahmeöffnung in Verbindung mit dem Bolzen und dem Langloch derart ausgebildet ist, dass die Aufnahmeöffnung bei Erreichen des Kraftschwellwerts in Kraftfahrzeug-X-Richtung nach hinten ausgeschoben wird.

In einer weiteren bevorzugten Ausführungsvariante ist der Anbindungsbereich derart ausgebildet, dass er bei Erreichen eines Kraftschwellwertes in Kraftfahrzeug-X-Richtung und/oder in Kraftfahrzeug-Y-Richtung und/oder in Kraftfahrzeug-Z-Richtung zumindest bereichsweise ausreißt. Die Rissbildung bzw. das Ausreißen kann für die Hauptausklinkfunktion, also in maßgeblicher Kraftfahrzeug-X-Richtung, unterstützend ausgebildet sein oder aber in Kraftfahrzeug-Y- bzw. Kraftfahrzeug-Z-Richtung ergänzend und/oder unterstützend als Sicherheitsfunktion dienen.

Besonders bevorzugt sind in dem Anbindungsbereich Sollbruchstellen vorgesehen, die ein entsprechend kontrolliertes Ausreißen gewährleisten. Bei den Sollbruchstellen kann es sich beispielsweise um Sicken, Kerben oder aber auch um punktuelle Ausnehmungen oder aber Löcher handeln. Bei Überschreiten des Kraftschwellwertes kreist somit der Anbindungsbereich kontrolliert von der restlichen turmartigen vorderen Karosserieanbindung ab, was ergänzend zu dem Ausklinkvorgang oder aber alternativ zu dem Ausklinkvorgang erfolgt.

Weitere Vorteile, Merkmale, Eigenschaften und Aspekte der vorliegenden Erfindung ergeben sich aus der folgenden Beschreibung. Die schematischen Figuren dienen dem einfachen Verständnis der Erfindung. Es zeigen:
- Figur 1: eine erfindungsgemäße Achsanordnung;
- Figur 2: eine Aufnahmeöffnung in Detailansicht;
- Figur 3: eine Detailansicht einer turmartigen vorderen Karosserieanbindung und
- Figur 4: eine Detailansicht zwischen vorderer Karosserieanbindung und Verschraubung.

In den Figuren werden für gleiche oder ähnliche Bauteile dieselben Bezugszeichen verwendet, auch wenn eine wiederholte Beschreibung aus Vereinfachungsgründen entfällt.

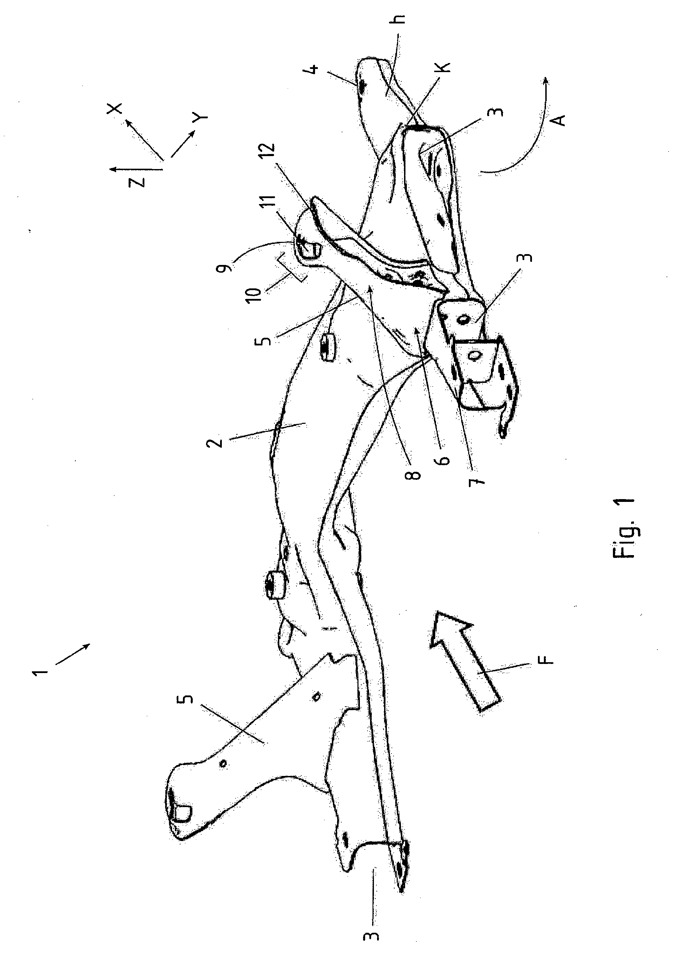

Figur 1 zeigt eine perspektivische Ansicht einer erfindungsgemäßen Achsanordnung 1 mit einem Achshilfsrahmen 2. An dem Achshilfsrahmen 2 sind Koppelstellen 3 zur Anbindung hier nicht näher dargestellter Achslenker vorgesehen. Die gesamte Achsanordnung 1 wird von unten an eine nicht näher dargestellte Kraftfahrzeugkarosserie gekoppelt. Hierzu sind an dem Achshilfsrahmen 2 mehrere Anbindungsstellen 4 vorgesehen, die an verschiedenen, entsprechend korrespondierenden Stellen der Kraftfahrzeugkarosserie zur Koppelung kommen. Weiterhin dargestellt in Figur 1 ist eine hintere Karosserieanbindung h, die sich als Fortsatz von dem Achshilfsrahmen 2 erstreckt. Zwischen der hinteren Karosserieanbindung h und dem Achshilfsrahmen 2 ist eine Sollknickstelle K ausgebildet, um die sich im Crashfall der Achshilfsrahmen 2 mit einer Abwärtsbewegung A unter eine hier nicht näher dargestellte Fahrgastzelle der Kraftfahrzeugkarosserie bewegt.

Erfindungsgemäß weist der Achshilfsrahmen 2 eine turmartige vordere Karosserieanbindung 5, auch Tower genannt, auf. Die Karosserieanbindung 5 ist insgesamt muldenartig ausgebildet, wobei sie einen Fußbereich 6 aufweist, der direkt mit einem Ausläufer 7 des Achshilfsrahmens 2 gekoppelt ist. Die Koppelung ist hier nicht näher dargestellt, sie kann beispielsweise durch Kleben oder aber auch Schweißen hergestellt sein. Von dem Fußbereich 6 aus erstreckt sich ein Halsbereich 8, der mit einer haubenartigen Kappe 9 abschließt. Die haubenartige Kappe 9 bildet in Kraftfahrzeug-Z-Richtung des Kraftfahrzeugkoordinatensystems den oberen Abschluss der turmartigen vorderen Karosserieanbindung 5. Das erfindungsgemäße Ausklinken der turmartigen vorderen Karosserieanbindung 5 ermöglicht somit die Abwärtsbewegung A des gesamten Achshilfsrahmens 2 im Zusammenspiel mit der hinteren Karosserieanbindung h.

In der Kappe 9 selbst ist ein erfindungsgemäßer Anbindungsbereich 10 ausgebildet, wobei sich innerhalb des Anbindungsbereichs 10 selbst wiederum eine Aufnahmeöffnung 11 befindet. Über die Aufnahmeöffnung 11 ist der Achshilfsrahmen 2 ebenfalls mit der nicht näher dargestellten Kraftfahrzeugkarosserie gekoppelt. Weiterhin weist die Kappe 9 umlaufend an einer äußeren Kante zumindest abschnittsweise einen Flansch 12 auf, der der weiteren Versteifung bzw. Verstärkung der Kappe 9 dient. Bei einer entsprechenden Krafteinwirkung F klinkt sich erfindungsgemäß der Achshilfsrahmen 2 zumindest im Bereich der vorderen Karosserieanbindung 5 in Kraftfahrzeug-X-Richtung aus, so dass eine weitere Deformation, die über die nicht näher dargestellten Achslenker in den Achshilfsrahmen 2 eingeleitet wird, maßgeblich ausschließlich am Achshilfsrahmen 2 selbst stattfindet und keine Deformation oder Beschädigung der Kraftfahrzeugkarosserie hervorruft.

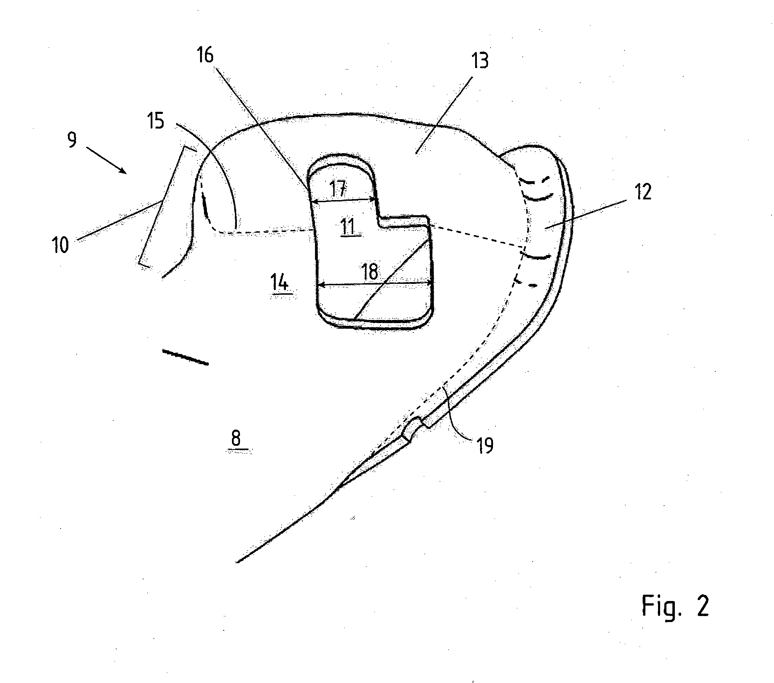

Figur 2 zeigt eine Detailansicht der Kappe 9 und somit des Anbindungsbereichs 10 der vorderen Karosserieanbindung. Die Kappe 9 selbst ist unterteilt in eine Oberseite 13 sowie in ein hier dargestelltes Seitenteil 14, wobei beide Teile von einer Biegekante 15 voneinander getrennt sind. Die Aufnahmeöffnung 11 selbst ist durch ein Langloch 16 ausgebildet, wobei das Langloch 16 im Bereich der Oberseite 13 mit einem schmalen Durchmesser 17 ausgebildet ist und im Bereich des Seitenteils 14 mit einem in Relation zum schmalen Durchmesser 17 breiteren Durchmesser 18 ausgebildet ist.

Das Langloch 16 ist somit asymmetrisch ausgebildet, wobei eine hier nicht näher dargestellte Verschraubung mit der Kraftfahrzeugkarosserie sich entsprechend durch den breiteren Durchmesser 18 bei Überschreiten eines Kraftschwellwertes ausklinkt. Eine nicht näher dargestellte Mutter der Verschraubung würde entsprechend durch den breiteren Durchmesser 18 gelangen und somit die vordere Karosserieanbindung 5 von der Kraftfahrzeugkarosserie lösen. Weiterhin dargestellt ist der die Kappe 9 umrandende Flansch 12. Der Flansch 12 weist weiterhin eine Ausnehmung 19 in seinem umlaufenden Seitenbereich auf, so dass hier eine weitere Sollknickstelle entsteht. Diese Sollknickstelle kann unterstützend bei einem etwaigen Faltverhalten oder aber einem Reißen wirken.

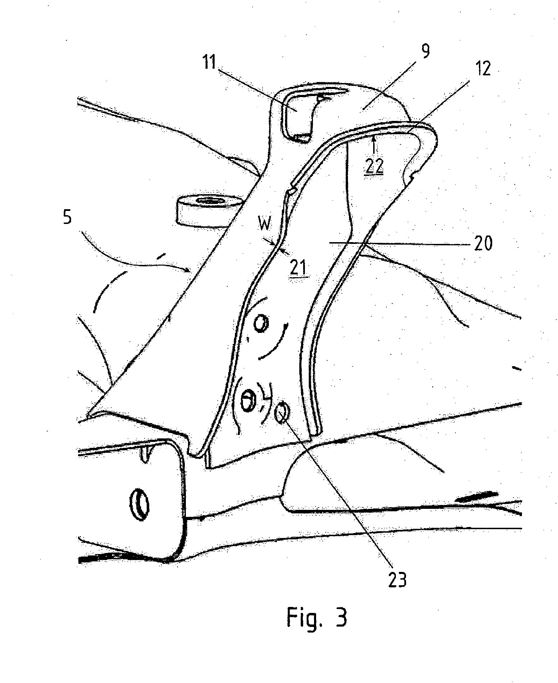

Figur 3 zeigt eine Seitenansicht der erfindungsgemäßen vorderen Karosserieanbindung 5, wobei hier gut zu erkennen ist, dass ein zusätzliches Verstärkungselement 20 in eine muldenartige Öffnung 21 der vorderen Karosserieanbindung 5 eingesetzt ist. Das zusätzliche Verstärkungselement 20 kann wiederum mit der vorderen Karosserieanbindung 5 durch Kleben, Schweißen oder sonstige Koppelungsmöglichkeit verbunden sein. Insbesondere im Bereich der Unterseite 22 der Kappe 9 ist es durch das Verstärkungselement 20 möglich, eine leichte Montage der Achsanordnung 1 an der Kraftfahrzeugkarosserie vorzunehmen. Die Aufnahmeöffnung 11 selbst ist von der Unterseite 22 aus frei zugänglich, so dass eine Verschraubung mit der Kraftfahrzeugkarosserie in dieser Ausführung möglich ist.

Weiterhin weist das Verstärkungselement 20 Wartungsöffnungen 23 auf. Hierdurch ist es wiederum möglich, diverse Verschraubungen oder sonstiges in einen nicht näher dargestellten Hohlraum zwischen Verstärkungselement 20 und vorderer Karosserieanbindung 5 einzubringen. Weiterhin ist die Wandstärke W an der vorderen Karosserieanbindung 5 dargestellt.

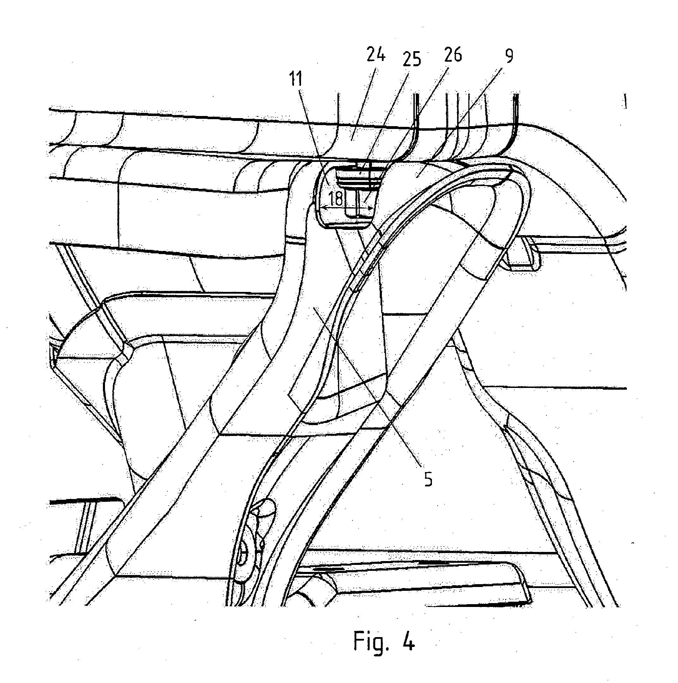

Figur 4 zeigt weiterhin eine Detailansicht der vorderen Karosserieanbindung 5, die an die hier dargestellte Kraftfahrzeugkarosserie 24 gekoppelt ist. Dargestellt ist, dass in der Aufnahmeöffnung 11 eine Verschraubung 25 von unten durch die Kappe 9 geführt ist und die vordere Karosserieanbindung 5 mit der Kraftfahrzeugkarosserie 24 verschraubt. Die Verschraubung 25 weist dazu einen Schraubenkopf 26 auf, der im Falle eines Unfalles durch den breiteren Durchmesser durch die Aufnahmeöffnung herausgleitet und somit die Ausklinkfunktion ermöglicht.

### Bezugszeichen:

- 1 -: Achsanordnung
- 2 -: Achshilfsrahmen
- 3 -: Koppelstellen
- 4 -: Anbindungsstellen
- 5 -: Karosserieanbindung
- 6 -: Fußbereich
- 7 -: Ausläufer
- 8 -: Halsbereich
- 9 -: Kappe
- 10 -: Anbindungsbereich
- 11 -: Aufnahmeöffnung
- 12 -: Flansch
- 13 -: Oberseite
- 14 -: Seitenteil
- 15 -: Biegekante
- 16 -: Langloch
- 17 -: schmaler Durchmesser
- 18 -: breiter Durchmesser
- 19 -: Umformkante
- 20 -: Verstärkungselement
- 21 -: muldenartige Öffnung
- 22 -: Unterseite zu 9
- 23 -: Wartungsöffnung
- 24 -: Kraftfahrzeugkarosserie
- 25 -: Verschraubung
- 26 -: Schraubenkopf

- F -: Krafteinwirkung
- W -: Wandstärke
- h -: hintere Karosserieanbindung
- K -: Sollknickstelle
- A -: Abwärtsbewegung

## Patentansprüche

1. Achsanordnung (1) für ein Kraftfahrzeug, wobei Achslenker über einen Achshilfsrahmen (2) an eine Kraftfahrzeugkarosserie gekoppelt sind und der Achshilfsrahmen (2) mit einer vorderen Karosserieanbindung (5) über eine Verschraubung (25) mit der Karosserie gekoppelt ist und sich die Karosserieanbindung (5) bei Erreichen eines Kraftschwellwertes aus der Verschraubung ausklinkt, **dadurch gekennzeichnet, dass** die vordere Karosserieanbindung (5) als einteiliges turmartiges Tiefziehbauteil ausgebildet ist.

2. Achsanordnung nach Anspruch 1, **dadurch gekennzeichnet, dass** die vordere Karosserieanbindung (5) als Blechbauteil ausgebildet ist, wobei das Blechbauteil aus einer metallischen Legierung oder Leichtmetalllegierung hergestellt ist, vorzugsweise als kaltumgeformtes oder warmumgeformtes und pressgehärtetes Blechbauteil.

3. Achsanordnung nach Anspruch 1 oder 2, **dadurch gekennzeichnet, dass** die vordere Karosserieanbindung (5) an einem Rand zumindest abschnittsweise einen umlaufenden Flansch (12) aufweist.

4. Achsanordnung nach einem der Ansprüche 1 bis 3, **dadurch gekennzeichnet, dass** der vorderen Karosserieanbindung (5) ein zusätzliches Verstärkungsbauteil (20) zugeordnet ist.

5. Achsanordnung nach einem der Ansprüche 1 bis 4, **dadurch gekennzeichnet, dass** die vordere Karosserieanbindung (5) als muldenartiges Bauteil ausgebildet ist, wobei das Verstärkungsbauteil (20) eine Öffnung (21) des muldenartigen Bauteils zumindest bereichsweise abdeckt.

6. Achsanordnung nach einem der Ansprüche 1 bis 5, **dadurch gekennzeichnet, dass** die vordere Karosserieanbindung (5) einen Anbindungsbereich (10) aufweist in dem die vordere Karosserieanbindung (5) mit der Kraftfahrzeugkarosserie gekoppelt ist.

7. Achsanordnung nach Anspruch 6, **dadurch gekennzeichnet, dass** in dem Anbindungsbereich (10) eine Aufnahmeöffnung (11) angeordnet ist, wobei der Achshilfsrahmen (2) über einen Bolzen mit der Kraftfahrzeugkarosserie gekoppelt ist.

8. Achsanordnung nach einem der Ansprüche 1 bis 7, **dadurch gekennzeichnet, dass** die vordere Karosserieanbindung (5) eine Wandstärke (W) zwischen 10 mm und 0,5mm, insbesondere zwischen 5 mm und 0,7 mm und besonders bevorzugt zwischen 3 mm und 2 mm aufweist.

9. Achsanordnung nach Anspruch 7 oder 8, **dadurch gekennzeichnet, dass** die Aufnahmeöffnung (11) asymmetrisch ausgebildet ist, vorzugsweise durch ein sich über eine Biegekante (15) erstreckendes Langloch (16), insbesondere ist das Langloch (16) an einer Oberseite (13) der vorderen Karosserieanbindung (5) schmaler ausgebildet als einem Seitenteil (14).

10. Achsanordnung nach Anspruch 9, **dadurch gekennzeichnet, dass** das Seitenteil (14) in Fahrtrichtung des Kraftfahrzeuges vorne an der vorderen Karosserieanbindung (5) angeordnet ist.

11. Achsanordnung nach einem der Ansprüche 7 bis 10, **dadurch gekennzeichnet, dass** die Aufnahmeöffnung (11) in Verbindung mit dem Bolzen und dem Langloch (16) derart ausgebildet ist, dass die Aufnahmeöffnung (11) bei Erreichen des Kraftschwellwertes nach hinten ausklinkt, vorzugsweise deformiert sich der Anbindungsbereich (10) vor und/oder während des Ausklinkens der Aufnahmeöffnung (11) aus der Verschraubung (25).

12. Achsanordnung nach einem der Ansprüche 6 bis 11, **dadurch gekennzeichnet, dass** der Anbindungsbereich (10) derart ausgebildet ist, dass er bei Erreichen eines Kraftschwellwertes in Kraftfahrzeug X Richtung und/oder in Kraftfahrzeug Y Richtung und/oder in Kraftfahrzeug Z Richtung zumindest bereichsweise ausreißt.

13. Achsanordnung nach Anspruch 1 bis 12, **dadurch gekennzeichnet, dass** im Anbindungsbereich (10) zumindest eine Sollbruchstelle vorgesehen ist.

## Claims

1. Axle arrangement (1) for a motor vehicle, axle guides being coupled to a motor vehicle body by means of an axle subframe (2),and the axle subframe (2) being coupled to the body by means of a front body attachment (5) via a screw connection (25), and the body attachment (5) being released from the screw connection when a force threshold is reached, **characterised in that** the front body attachment (5) is in the form of a monobloc tower-like deep-drawing component.

2. Axle arrangement according to claim 1, **characterised in that** the front body attachment (5) is in the form of a sheet component, the sheet component being produced from a metal alloy or light metal alloy, preferably as a cold-formed or hot-formed and press-hardened sheet component.

3. Axle arrangement according to either claim 1 or claim 2, **characterised in that** an edge of the front body attachment (5) comprises a peripheral flange (12) on at least some portions.

4. Axle arrangement according to any of claims 1 to 3, **characterised in that** an additional reinforcing component (20) is associated with the front body attachment (5).

5. Axle arrangement according to any of claims 1 to 4, **characterised in that** the front body attachment (5) is in the form of a trough-like component, the reinforcing component (20) covering an opening (21) of the trough-like component at least in regions.

6. Axle arrangement according to any of claims 1 to 5, **characterised in that** the front body attachment (5) comprises anattachment region (10) in which the front body attachment (5) is coupled to the motor vehicle body.

7. Axle arrangement according to claim 6, **characterised in that** a receiving opening (11) is arranged in the attachment region (10), the axle subframe (2) being coupled to the motor vehicle body by means of a pin.

8. Axle arrangement according to any of claims 1 to 7, **characterised in that** the front body attachment (5) has a wall thickness (W) of between 10 mm and 0.5 mm, more particularly between 5 mm and 0.7 mm, and most preferably between 3 mm and 2 mm.

9. Axle arrangement according to either claim 7 or claim 8, **characterised in that** the receiving opening (11) is designed to be asymmetrical, preferably due to a slot (16) extending over a bent edge (15), more particularly the slot (16) is designed to be narrower on a top side (13) of the front body attachment (5) than on a lateral part (14).

10. Axle arrangement according to claim 9, **characterised in that** the lateral part (14) is arranged on the front body connection (5) at the front in the direction of travel of the motor vehicle.

11. Axle arrangement according to any of claims 7 to 10, **characterised in that** the receiving opening (11) is designed in conjunction with the pin and the slot (16) in such a way that the receiving opening (11) disengages backwards when the force threshold is reached, the attachment region (10) preferably deforms before and/or during the disengagement of the receiving opening (11) from the screw connection (25).

12. Axle arrangement according to any of claims 6 to 11, **characterised in that** the attachment region (10) is designed in such a way that it tears at least in regions in motor vehicle direction X and/or motor vehicle direction Y and/or motor vehicle direction Z when a force threshold is reached.

13. Axle arrangement according to claims 1 to 12, **characterised in that** at least one predetermined breaking point is provided in the attachment region (10).

## Revendications

1. Ensemble d'essieu (1) pour un véhicule automobile, dans lequel des bras oscillants d'essieu sont couplés via un châssis secondaire d'essieu (2) sur une carrosserie de véhicule automobile et le châssis secondaire d'essieu (2) est couplé à une attache de carrosserie avant (5) via une fixation vissée (25) avec la carrosserie et l'attache de carrosserie (5) se dégage de la fixation vissée lorsqu'une valeur de seuil de force est atteinte, **caractérisé en ce que** l'attache de carrosserie avant (5) se présente sous la forme d'une pièce emboutie en forme de tour d'une seule pièce.

2. Ensemble d'essieu selon la revendication 1, **caractérisé en ce que** l'attache de carrosserie avant (5) se présente sous la forme d'une pièce de tôle, dans lequel la pièce de tôle est formée d'un alliage métallique ou d'un alliage de métaux légers, de préférence sous la forme d'une pièce de tôle façonnée à froid ou façonnée à chaud et durcie par pression.

3. Ensemble d'essieu selon la revendication 1 ou la revendication 2, **caractérisé en ce que** l'attache de carrosserie avant (5) présente sur un bord au moins par sections une bride périphérique (12).

4. Ensemble d'essieu selon l'une quelconque des revendications 1 à 3, **caractérisé en ce qu'**il est affecté à l'attache de carrosserie avant (5) une pièce de renfort supplémentaire (20).

5. Ensemble d'essieu selon l'une quelconque des revendications 1 à 4, **caractérisé en ce que** l'attache de carrosserie avant (5) se présente sous la forme d'une pièce en forme d'auge, dans lequel la pièce de renfort (20) recouvre au moins par zones une ouverture (21) de la pièce en forme d'auge.

6. Ensemble d'essieu selon l'une quelconque des revendications 1 à 5, **caractérisé en ce que** l'attache de carrosserie avant (5) présente une zone d'attache (10), dans laquelle l'attache de carrosserie avant (5) est couplée à la carrosserie du véhicule automobile.

7. Ensemble d'essieu selon la revendication 6, **caractérisé en ce qu'**il est ménagé dans la zone d'attache (10) une ouverture réceptrice (11), dans laquelle le châssis secondaire d'essieu (2) est couplé à la carrosserie du véhicule automobile via un boulon.

8. Ensemble d'essieu selon l'une quelconque des revendications 1 à 7, **caractérisé en ce que** l'attache de carrosserie avant (5) présente une épaisseur de paroi (W) entre 10 mm et 0,5 mm, en particulier entre 5 mm et 0,7 mm et, tout particulièrement, entre 3 mm et 2 mm.

9. Ensemble d'essieu selon la revendication 7 ou la revendication 8, **caractérisé en ce que** l'ouverture réceptrice (11) se présente sous une forme asymétrique, de préférence sous la forme d'un trou oblong (16) s'étendant sur une arête de flexion (15), le trou oblong (16) étant en particulier conformé plus étroit sur le côté supérieur (13) de l'attache de carrosserie avant (5) que sur la partie latérale (14).

10. Ensemble d'essieu selon la revendication 9, **caractérisé en ce que** la partie latérale (14) est aménagée à l'avant dans la direction de conduite du véhicule automobile sur l'attache de carrosserie avant (5).

11. Ensemble d'essieu selon l'une quelconque des revendications 7 à 10, **caractérisé en ce que** l'ouverture réceptrice (11) est conformée en liaison avec le boulon et le trou oblong (16) de sorte que l'ouverture réceptrice (11) se dégage vers l'arrière lors que la valeur de seuil de force est atteinte, de préférence la zone d'attache (10) se déforme avant et/ou pendant le dégagement de l'ouverture réceptrice (11) de la fixation vissée (25).

12. Ensemble d'essieu selon l'une quelconque des revendications 6 à 11, **caractérisé en ce que** la zone d'attache (10) est conformée de sorte qu'elle se déchire au moins par zones lorsqu'une valeur de seuil de force est atteinte dans la direction X du véhicule automobile et/ou dans la direction Y du véhicule automobile et/ou dans la direction Z du véhicule automobile.

13. Ensemble d'essieu selon les revendications 1 à 12, **caractérisé en ce qu'**il est prévu au moins un point de rupture dans la zone d'attache (10).
